(19) Europäisches Patentamt / European Patent Office / Office européen des brevets

(11) **EP 3 843 542 B1**

(12) **EUROPEAN PATENT SPECIFICATION**

(45) Date of publication and mention
of the grant of the patent:
**15.05.2024 Bulletin 2024/20**

(21) Application number: **19752823.5**

(22) Date of filing: **31.07.2019**

(51) International Patent Classification (IPC):
***A01K 61/60*** (2017.01)        ***A01K 61/80*** (2017.01)

(52) Cooperative Patent Classification (CPC):
**A01K 61/80; A01K 61/60;** Y02A 40/81

(86) International application number:
**PCT/US2019/044296**

(87) International publication number:
**WO 2020/046523 (05.03.2020 Gazette 2020/10)**

(54) **OPTIMAL FEEDING BASED ON SIGNALS IN AN AQUACULTURE ENVIRONMENT**

OPTIMALE FÜTTERUNG AUF DER BASIS VON SIGNALEN IN EINER AQUAKULTURUMGEBUNG

ALIMENTATION OPTIMALE BASÉE SUR DES SIGNAUX DANS UN ENVIRONNEMENT AQUACOLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.08.2018 US 201862723067 P**

(43) Date of publication of application:
**07.07.2021 Bulletin 2021/27**

(73) Proprietor: **Aquabyte, Inc.
San Francisco, California 94103 (US)**

(72) Inventor: **SHANG, Bryton
San Francisco, California 94110 (US)**

(74) Representative: **CMS Cameron McKenna Nabarro
Olswang LLP
Cannon Place
78 Cannon Street
London EC4N 6AF (GB)**

(56) References cited:
**EP-A1- 1 510 125          WO-A1-2009/008733
WO-A1-2016/023071     WO-A2-2018/111124
TW-B- I 574 612           US-A- 5 732 655
US-A1- 2013 284 105    US-A1- 2017 150 701**

**Description**

TECHNICAL FIELD

The present disclosure is directed to optimal feeding of fish based on signals in an aquaculture environment.

BACKGROUND

The growth rate of world human population is applying substantial pressure on the planet's natural food resources. Aquaculture will play a significant part in feeding this growing human population.

Aquaculture is the farming of aquatic organisms (fish) in both coastal and inland areas involving interventions in the rearing process to enhance production. Aquaculture has experienced dramatic growth in recent years. The United Nations Food and Agriculture Organization estimates that aquaculture now accounts for half of the world's fish that is used for food.

Feed is a significant cost of raising farmed fish. Thus, fish farm operators would appreciate technology that enables them to optimize feed.

The techniques herein address this and other issues.

Document WO2016023071 A1 discloses an aquatic management system for managing an aquatic ecosystem having a body of water harbouring aquatic animals, comprising: a powered vehicle capable of moving within the body of water; a task implementing system connected to the powered vehicle capable of performing a plurality of tasks pertaining to the management of the aquatic ecosystem; a navigation system capable of guiding the powered vehicle to any location or along any path within the body of water for the task implementing system to implement a management task with respect to the aquatic ecosystem. The system can be implemented automatically such that the management task such as feeding aquatic animals, can be largely performed without the need of human operators. The system feeds animals when the animals are hungry for instance when the system identifies feed-seeking activity and/or detected feeding activity.

Document US5732655A discloses an automatic feeding apparatus for aquatic life comprising a cultivating device for cultivating the aquatic life, and a feeding device for supplying food, which further comprises an image acquisition device for taking an image of wave forms at surface of water in the cultivating device, an image processing device for processing the image to a binary image, an activity calculating device for calculating a value indicating the activity of the aquatic life by calculating a total number and/or a total area of the wave forms based on the binary image, a feeding amount control device for controlling feeding amount and feeding time of the feeding device based on the value, and a device for adjusting the feeding amount based on cultivation environment and/or number and size of the aquatic life.

BRIEF DESCRIPTION OF THE DRAWINGS

FIG. 1 is a schematic diagram of an example aquaculture environment in which techniques for optimal feeding based on signals in aquaculture environment may be implemented.
FIG. 2 is a schematic of a feed optimization process.
FIG. 3 illustrates truss and conventional dimensions of fish.
FIG. 4 depicts a biomass estimation sub-system of an image processing system.

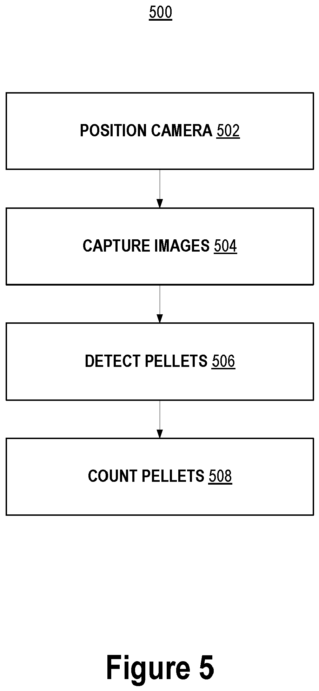

FIG. 5 is a flowchart of a process for feed pellet detection.
FIG. 6 depicts basic computer hardware that may be used in an implementation.

DETAILED DESCRIPTION

The invention provides a system for optimizing feeding of freely swimming fish in a fish farming enclosure in an aquaculture environment according to independent claim 1. The invention further provides a computer-implemented method for optimizing feeding of freely swimming fish in a fish farming enclosure in an aquaculture environment according to independent claim 9.

Preferred embodiments of the invention are set out in the dependent claims.

In the following description, for the purposes of explanation, numerous specific details are set forth in order to provide a thorough understanding of the present invention. It will be apparent, however, that the present invention may be practiced without these specific details. In other instances, well-known structures and devices are shown in block diagram form in order to avoid unnecessarily obscuring the present invention.

OPTIMAL FEEDING

As mentioned, feed is a significant, if not the greatest, operating expense of fish farmers. Techniques are proposed for amalgamating relevant detectable signals in an aquaculture environment into a holistic feed model that is used to select the optimal amount of feed to dispense to the farmed fish given all of:

- Long term profit maximization plus macroeconomic conditions,
- Legal, temporal and economic constraints on farming,
- Fish biology and metabolism,
- Environmental conditions, and
- Real-time conditions in the fish farming enclosure.

Currently, on a per-license basis, fish farms may produce from between 800 - 1400 metric tons of fish, per year. This represents a large deviation in the performance of each of these farms. It is inherently difficult to optimally feed farmed fish because there are so many of them and are not easily observable. Overfeeding the fish will waste calories, pollute the ocean sea bed, and waste money. Underfeeding the fish will lead to insufficient basal metabolism for weight gain and is also a fish welfare / animal rights issue.

Fish are animals and their growth depend on biological factors such as genetics, feed intake, size, temperature / season, and stress that have been well studied by fish nutritionists. Example growth models are described in the paper by A. Dumas, J. France and D. Bureau, "Modelling growth and body composition in fish nutrition: where have we been and where are we going?", Aquaculture Research, 2010, 41, 161-181.

Most of these models encompass partial differential equations that describe the rate of fish growth as a function of environmental conditions (temperature, oxygen, daylight, etc.), fish conditions (size of fish, activity levels, health conditions), and feed intake (macro-calorie composition, etc.). According to some embodiments of the present invention, these conditions are automatically detected and input to the feed model.

The present invention proposes to measure all relevant conditions for fish in the fish farming enclosure, both on a group level and per-fish. Then, a computerized feed system is trained to determine how much feed and which feed to dispense in a current time horizon, represented as a rate such as for example kilograms per unit of time. The computerized feed system can automatically dispense feed according to the feed model, that maximizes on a per-unit basis of time by: (1) fitting partial differential equations that describe the rate of fish growth as function of the measured relevant conditions and (2) maximizing per unit profit economics by creating various feeding policies that adjust the optimal amount of feed.

According to one possible feed model of the present invention, a goal is in each time period $t$, choose a feed dispense rate $R_t$ for a fish farming enclosure that maximizes marginal profit. For example, the parameter $t$ may represent a number of months such as for example 12 to 18 months, or the number of months in a growing cycle. More formally, a goal may be to maximize profit from time 0 to time $t$ as in:

$$\Pi_t = P_t \times B_t - F_t$$

$\Pi_t$ represents the total profit over time 0 to time t.
$P_t$ represents the market price of the fish over time 0 to time $t$.
$B_t$ represents the average estimated biomass of fish in the fish farming enclosure over time 0 to time $t$, or average biomass of individual biomass estimates of fish in the fish farming enclosure over time 0 to time $t$.
$F_t$ represents the cost of feed over time 0 to time $t$.

The biomass $B_t$ in the fish farming enclosure over time 0 to time $t$ may be represented as the integral:

$$B_t = \int_0^t FCR(f_t) \times R_t \, dt.$$

Here, FCR represents the feed conversion ratio over time 0 to time t for the fish farming enclosure as a function of a number of feed conversation factors $f_t$ determined for time 0 to time t including:

- the feed dispense rate $R_t$ for the fish farming enclosure over time 0 to time t,
- the biomass $B_t$ for the fish farming enclosure over time 0 to time $t$,

- the dissolved oxygen sensed $O_t$ for the fish farming enclosure over time 0 to time t, and
- the water temperature sensed $T_t$ for the fish farming enclosure over time 0 to time t.

The cost of feed $F_t$ over time 0 to time $t$ may be represented as the integral:

$$F_t = \int_0^t C_t R_t \, dt$$

Here, $C_t$ is the per-unit cost of feed over time 0 to time $t$ and $R_t$ is the feed dispense rate for the fish farming enclosure over time 0 to time $t$.

As such, maximizing the total profit $\Pi_t$ for time t may be solved by selecting a feeding rating $R_t$ for time t that maximizes the following differential equation:

$$\frac{d\Pi}{dt} = P_t \times \frac{dB}{dt} - \frac{dF}{dt}$$

This differential equation may be expressed as:

$$\frac{d\Pi}{dt} = P_t \times FCR(t, R_t, B_t, O_t, T_t) \times R_t - C_t R_t$$

Other useful feed conversion factors can be incorporated into the feed model. For example, the equations could incorporate quantitative values that reflect the nutritional quality of the feed over time 0 to time $t$. In addition, or alternatively, the feed model could incorporate quantitative values that reflect the amount(s) of different type(s) of additives (e.g., probiotics or other regulatory approved additives) to the feed over time 0 to time $t$. Other feed conversation factors that can be incorporated into these equations include quantitative values reflecting the appetite levels of the fish and / or the temporo-spatial location of the fish in the fish farming enclosure over time 0 to time $t$.

Achieving maximum profit for fish farmers from harvest is difficult because it is generally unclear whether the optimal profit maximizing decision is to grow the fish in fish farming enclosure quickly now or later, and because fish and feed prices vary throughout the year due to seasonality. Thus, one extension of the present invention is to train the feed system holistically across the entire growing cycle of a fish.

A reinforcement learning approach is also possible whereby dispensing the right amount of feed is based on training a reward function when profit is maximized.

The feed may be dispensed by sending a signal to a feed controller programmable logic controller (PLC) to dispense an appropriate amount of feed. This controls a silo which holds the feed, a selector and a feed pellet doser which dispenses the right amount and type of feed, and a blower which blows the feed to the fish farming enclosure. Over time, response of the fish to the feed dosage can be observed and the model adjusted accordingly.

## AQUACULTURE ENVIRONMENT FOR OPTIMAL FEEDING AND BIOMASS ESTIMATION

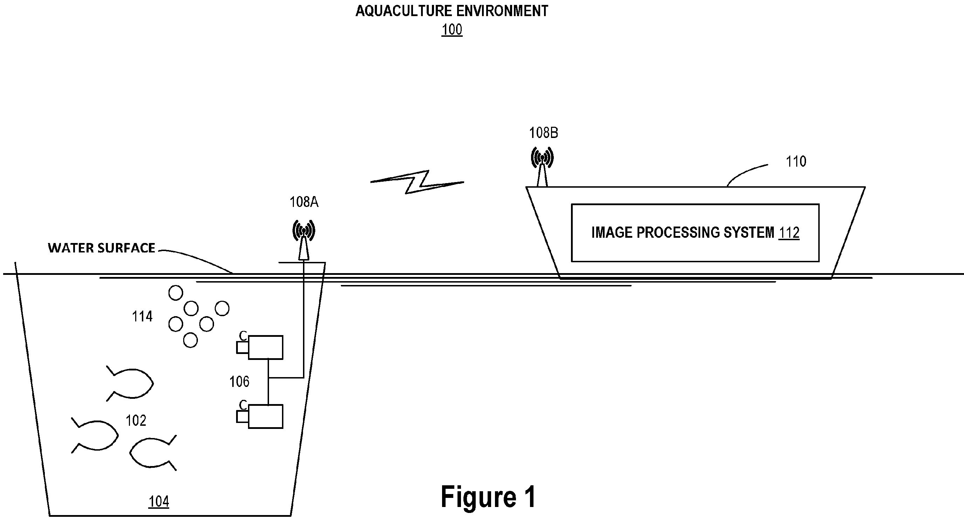

FIG. 1 is a schematic diagram of an aquaculture environment 100 for automatic pellet monitoring of pelletized feed 114 dispensed to fish 102 in a fish farming enclosure 104. The environment 100 includes a high-resolution, light sensitive, digital camera 106 within a waterproof housing immersed underwater in the fish farming enclosure 104.

In some implementations, camera 106 is an approximately 12-megapixel monochrome or color camera with a resolution of approximately 4096 pixels by 3000 pixels, and a frame rate of approximately one (1) to eight (8) frames per second. Although different cameras with different capabilities including higher frame rates may be used according to the requirements of the particular implementation at hand. For example, various different lens filters and artificial lighting techniques may be used. According to the invention, camera 106 is a stereo digital camera.

Selection of the camera lens for camera 106 may be based on an appropriate baseline and focal length to capture images of a fish swimming in front of a camera where the fish is close enough to the lenses for proper pixel resolution and feature detection in the captured image, but far enough away from the lenses such that the fish can fit in both the left and right frames. For example, 8-millimeter focal length lenses with high line pair count (lp/mm) can be used such that each of the pixels in a captured image can be resolved. The baseline of the camera 106 may have greater variance such as, for example, within the range of 6 to 12-centimeter baseline.

The fish farming enclosure 104 may be a net pen framed by a plastic or steel cage that provides a substantially inverted conical, circular, or rectangular cage, or cage of other desired dimensions. The fish farming enclosure 104 may hold a number of fish of a particular type (e.g., salmon). The number of fish held may vary depending on a variety of factors such as the size of the fish farming enclosure 104 and the maximum stocking density of the particular fish caged. For example, a fish farming enclosure for salmon may be 50 meters in diameter, 20-50 meters deep, and hold up to approximately 200,000 salmon assuming a maximum stocking density of 10 to 25 kg/m3.

While in some implementations the techniques for automatic pelleting monitoring disclosed herein are applied to a sea net pen environment, the techniques are applied to other fish farming enclosures in other embodiments. For example, the techniques may be applied to fish farm ponds, tanks, or other like fish farm enclosures.

The camera 106 may be attached to a winch system that allows the camera 106 to be relocated underwater in the fish farming enclosure 104 to capture images of feed 114 and fish 102 from different locations within the fish farming enclosure 104. For example, the winch system may allow the camera 106 to move around the perimeter and the interior of the fish farming enclosure 104 and at various depths within the fish farming enclosure 104 to capture images of feed 114 and fish 102 at different depths and locations within the fish farming enclosure 104. The winch system may also allow control of pan and tilt of the cameras 106.

The winch system may be operated manually by a human controller such as, for example, by directing user input to an above-water surface winch control system. Alternatively, the winch system may operate autonomously according to a winch control program configured to adjust the location of the camera 106 within the fish farming enclosure 104, for example, in terms of location on the perimeter of the cage and depth within the fish farming enclosure 104.

The autonomous winch control system may adjust the location of the camera 106 according to a series of predefined or pre-programmed adjustments and /or according to detected signals in the fish farming enclosure 104 that indicate better or more optimal locations for capturing images of feed 114 and the fish 102 relative to a current position and/or orientation of the camera 106. A variety of signals may be used such as, for example, machine learning and computer vision techniques applied to images captured by the camera 106 to detect schools or clusters of feed 114 or fish 102 currently distant from the camera 106 such that a closer location can be determined and the location, tilt, and / or pan of the camera 106 adjusted to capture more suitable images of feed 114 and fish 102. Similar techniques may be used to automatically determine that the cameras 106 should remain or linger in a current location and /or orientation because the camera 106 are currently in a good position to capture suitable images of feed 114 or fish 102 for pellet monitoring.

It is also possible to illuminate the fish farming enclosure 104 with ambient lighting in the blue-green spectrum (450nm to 570nm). This may be useful to increase the length of the daily sample period during which useful images of feed 114 and fish 102 in the fish farming enclosure 104 may be captured. For example, depending on the current season (e.g., winter), time of day (e.g., sunrise or sunset), and latitude of the fish farming enclosure 104, only a few hours during the middle of the day may be suitable for capturing useful images without using ambient lighting. This daily period may be extended with ambient lighting.

The fish farming enclosure 104 may be configured with a wireless cage access point 108A for transmitting stereo images captured by the cameras 106 and other information wirelessly to a barge 110 or other water vessel that is also configured with a wireless access point 108B. The barge 110 may be where on-site fish farming process control, production, and planning activities are conducted.

The barge 110 may house a computer image processing system 112 that embodies techniques disclosed herein for automatic pellet monitoring. While camera 106 can be communicatively coupled to image processing system 112 wirelessly via wireless access points 108, camera 106 can be communicatively coupled to image processing system 112 by wire such as, for example, via a wired fiber connection between fish farming enclosure 104 and barge 110.

Some or all of image processing system 112 can be located remotely from camera 106 and connected to camera 106 by wire or coupled wirelessly. However, some or all of the image processing system 112 can be a component of the camera 106. In this implementation, the camera 106 may be configured within an on-board graphics processing unit (GPU) or other on-board processor or processors capable of executing the image processing system 112, or portions thereof.

In any implementation, output of the image processing system 112 based on processing images captured by camera 106 may be uploaded to the cloud or otherwise over the internet via a cellular data network, satellite data network, or other suitable data network to an online service configured to provide uneaten / wasted pellet count or density estimates or other information derived by the online service therefrom in a web dashboard or the like (e.g., in a web browser, a mobile application, a client application, or other graphical user interface.) One skilled in the art will recognize from the foregoing description that there is no requirement that image processing system 112 be contained on barge 110 or that barge 110 be present in the aquaculture environment. Instead, camera 106 may contain image processing system 112 or be coupled by wire to a computer system that contains image processing system 112. The computer system may be affixed above the water surface to fish farming enclosure 104 and may include wireless data communications capabilities for transmitting and receiving information over a data network (e.g., the Internet).

As another alternative, image processing system 112 may be located in the cloud (e.g., on the internet). In this configuration, camera footage captured by camera 106 is uploaded over a network (e.g., the internet) to the system 112 in the cloud for processing there. The barge 110 or other location at the fish farm may have a personal computing device (e.g., a laptop computer) for accessing a web application over the network. The web application may drive a graphical user interface (e.g., web browser web pages) at the personal computing device where the graphical user interface presents results produced by the system 112 such as analytics, reports, etc. generated by the web application based on the automatic pellet monitoring.

Although not shown in FIG. 1, the barge 110 may include a mechanical feed system that is connected by physical pipes to the fish farming enclosure 104. The feed system may deliver food pellets 114 via the pipes in doses to fish 102 in the fish farming enclosure 104. The feed system may include other components such as a feed blower connected to an air cooler which is connected to an air controller and a feed pellet doser which is connected to a feed selector that is connected to the pipes to the fish farming enclosure 104. Results and outputs of the automatic pellet monitoring performed by the image processing system 112 may be used as input to the feed system for determining the correct amount of feed 114 to dispense in terms of dosage amounts and dosage frequency, thereby improving the operation of the feed system.

As well as being useful for determining the correct amount of feed 114 to dispense, the results and outputs of the automatic pellet monitoring by the image processing system 112 are also useful for determining more optimal feed formulation. Feed formulation includes determining the ratio of fat, protein, and other nutrients in the food pellets fed to the fish 102. Feed formulation can also include determining the inclusion and amount of feed additives in the food pellets fed to the fish 102. Using the results and outputs of the automatic pellet monitoring, precise feed formulations for the fish in that fish farming enclosure may be determined. It is also possible to have different formulations for the fish in different fish farming enclosures based on the results and outputs. For example, the results and outputs may be used to select feed 114 to dispense in the fish farming enclosure 104 from multiple different silos of pelletized feed. The different silos of feed may have different predetermined nutrient mixes and / or different pellet sizes. The results and outputs of the automatic pellet monitoring may be used to automatically select which silo or silos to dispense feed from.

FEED OPTIMIZATION PROCESS

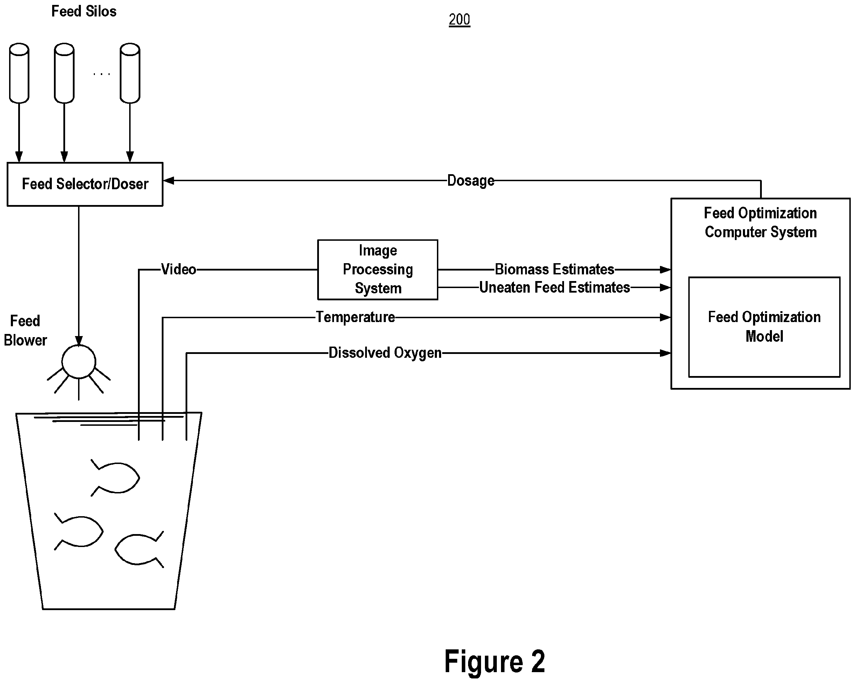

FIG. 2 is a schematic 200 of the feed optimization process according to some embodiments of the present invention. Various signals about conditions in the fish farming enclosure are detected including underwater video camera footage that is input to an image processing system.

The image processing system outputs biomass estimates and uneaten feed estimates to a feed optimization system that is configured with a feed optimization model. Temperature readings and dissolved oxygen sensor readings are also input to the feed optimization system.

The feed optimization system applies the feed optimization model to the biomass estimates, the uneaten feed estimates, the temperature readings and the dissolved oxygen readings to determine a feed dosage. The feed dosage may include an amount of feed to dispense at a next feeding of fish in the fish farming enclosure.

In addition, or alternatively, the feed dosage may also include a rate of feed to dispense at the next feeding. In addition, the feed dosage may include a nutrient mix or feed-type ratio of which the feed at the next feeding should be composed. The dosage is input to a feed selector/doser. Based on the input dosage, the feed selector/doser selects an amount of feed to dispense over the water surface of the fish farming enclosure at the next feeding. If the dosage encompasses a nutrient mix, then the feed selector/doser may select the appropriate mix of feed from various feed silos containing different feed compositions. The selected feed in the selected amount is then dispersed over the water surface of the fish farming enclosure via a feed blower. The video, temperature and dissolved oxygen signals captured during the feeding may be input to the image processing system and the feed optimization system to optimize the next feeding cycle. This cycle may be repeated over time to optimize feeding automatically, on an ongoing basis.

The various signals may include video captured by a camera that is input to an image processing system. The various signals may also include water temperature readings from a temperature sensor and dissolved oxygen readings from a dissolved oxygen sensor input to a feed optimization system. The readings may be obtained by the feed optimization system in a time series manner such as a reading every minute or every few minutes. In addition, or alternatively, the various signals can include appetite levels of the fish as inferred by detecting motion behavior of fish in the fish farming enclosure using computer vision techniques. For example, computer vision techniques can be applied to video captured by a camera to determine velocity and overall motion activity of the fish in the fish farming enclosure. Faster swimming fish and greater motion activity

Image processing system may apply various computer vision techniques to estimate the average biomass of the fish in the fish farming enclosure and to estimate the amount of uneaten feed pellets, as well as density of the fish in a feeding area, including different feeding areas at different depths in the fish farming enclosure. The biomass estimates may be generated for a particular period of time or on a recurring basis. For example, a biomass estimate may be generated for a particular day or particular week based on the video footage captured during that day or week. The uneaten feed estimates may be generated for each feeding based on video footage captured during the feeding. Computer vision techniques for estimating the average biomass of fish in the fish farming enclosure for a period of time during which video footage of fish in the fish farming enclosure is captured are described in greater detail below. Computer vision techniques for estimating the amount of uneaten feed are also described in greater detail below.

COMPUTER VISION TECHNIQUES FOR ESTIMATING THE AVERAGE BIOMASS OF FISH IN THE FISH FARMING ENCLOSURE

The camera 106 immersed in the fish farming enclosure 104 is according to the invention a stereo-vision camera. One challenge with a stereo-vision system is the accurate estimation of biomass from the two-dimensional stereo camera images. For example, a single lateral dimension of a fish such as fork length not be sufficient to accurately predict the weight of the fish because of variances in fish size and feeding regimes. In some embodiments, to improve the accuracy of the weight prediction, the image processing system 112 automatically detects and captures a set of one or more morphological lateral body dimensions of a fish that are useful for accurately predicting the weight of the fish.

Once the dimensions are known, the weight may be calculated. The weight may be calculated using a regression equation, for example. The regression equation may be developed using regression analysis on known ground truth weight and dimension relationships of fish. The regression equation may be fish specific reflecting the particular morphological characteristics of the fish. For example, a different regression equation or set of equations may be used for Scottish salmon that is used for Norwegian salmon which are typically heavier than Scottish salmon.

The weight calculated can be a discrete value representing a predicted weight of the fish or multiple values representing a probability distribution of the predicted weight of the fish.

Multiple regression equations may be used to calculate multiple weights for a fish and the weights averaged (e.g., a weighted average) to a calculate a final weight prediction for the fish.

A regression equation used can be a single-factor regression equation or a multi-factor regression equation. A single-factor regression equation can predict the weight within a degree of accuracy using only one of the dimensions. A multi-factor regression equation can predict the weight within a degree of accuracy using multiple of the dimensions.

Different regression equations or sets of regression equations may be used in different situations depending on the particular morphological lateral body dimensions the system 112 is able to determine from different sets of stereo images. Various different morphological lateral body measurements and regression equations can be used such as those described in the paper by Beddow, T.A. and Ross, L.G., "Predicting biomass of Atlantic salmon from morphometric lateral measurements," in the Journal of Fish Biology 49(3): 469-482. The system 112 is not limited to any particular set of morphological lateral body dimensions or any particular set of regression equations.

According to the Beddow or Ross paper referenced above, the morphological lateral body dimensions depicted in FIG. 2 may be especially suitable for predicting the weight of an individual fish to in some cases within plus or minus two percent (2%) of the actual weight.

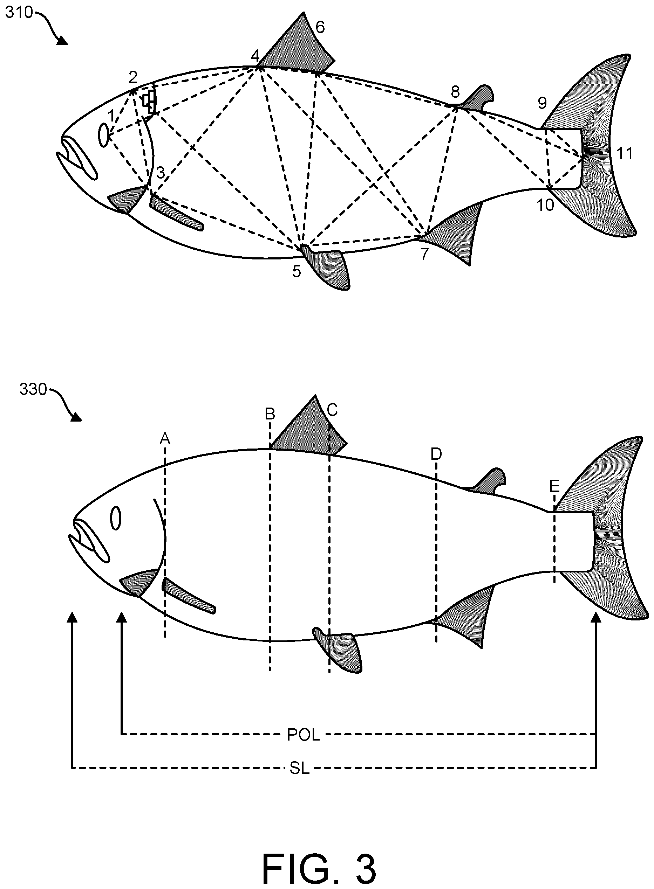

FIG. 3 depicts truss dimensions 310 and conventional dimensions 330.

The truss dimensions 310 (shown as dashed lines) are established by corresponding landmark points on the fish and lines between the landmark points. The various landmark points include (1) the posterior most part of the eye, (2) the posterior point of the neurocranium (where scales begin), (3) the origin of the pectoral fin, (4) the origin of the dorsal fin, (5) the origin of the pelvic fin, (6) the posterior end of the dorsal fin, (7) the origin of the anal fin, (8) the origin of the adipose fin, (9) the anterior attachment of the caudal fin to the tail, (10) the posterior attachment of the caudal fin to the tail and (11) the base of the middle caudal rays.

The conventional dimensions 330 include (A) the body depth at origin of the pectoral fin, (B) the body depth at origin of the dorsal fin, (C) the body depth at end of the dorsal fin, (D) the body depth at origin of the anal fin, (E) the least depth of the caudal peduncle, (POL) the post-orbital body length, and (SL) the standard body length.

The conventional dimensions 330 correspond to various landmark areas of the fish. The head area (SL)-(A) is between the start of the (SL) the standard body length at the anterior end of the fish and (A) the body depth at the origin pectoral fin. The pectoral area (A)-(B) is between the (A) the body depth at the origin pectoral fin and (B) the body depth at the origin of the dorsal fin is. The anterior dorsal area (B)-(C) is between the (B) body depth at the origin of the dorsal fin and (C) the body depth at the end of the dorsal fin. The posterior dorsal area (C)-(D) is between the (C) the body depth at end of the dorsal fin and (D) the body depth at origin of the anal fin. The anal area (D)-(E) is between (D) the body depth at origin of the anal fin and (E) the least depth of the caudal peduncle. The tail area (E)-(SL) is between the (E) the least depth of the caudal peduncle and the end of the (SL) the standard body length at the posterior end of the fish.

The system 112 may automatically detect and identify one or more or all of the landmark points and the landmark areas discussed above for purposes of predicting the weight of the fish. The system 112 may do this even though the yaw, roll, and pitch angle of the fish 102 captured in the stereo images may be greater than zero degrees with respect to a fish that is perfectly lateral with the camera 106. By doing so, the system 112 can estimate biomass from stereo images of freely swimming fish 102 in the fish farming enclosure 104. The system 100 does not require a tube or a channel in the fish farming enclosure 104 through which the fish 102 must swim in order to accurately estimate biomass.

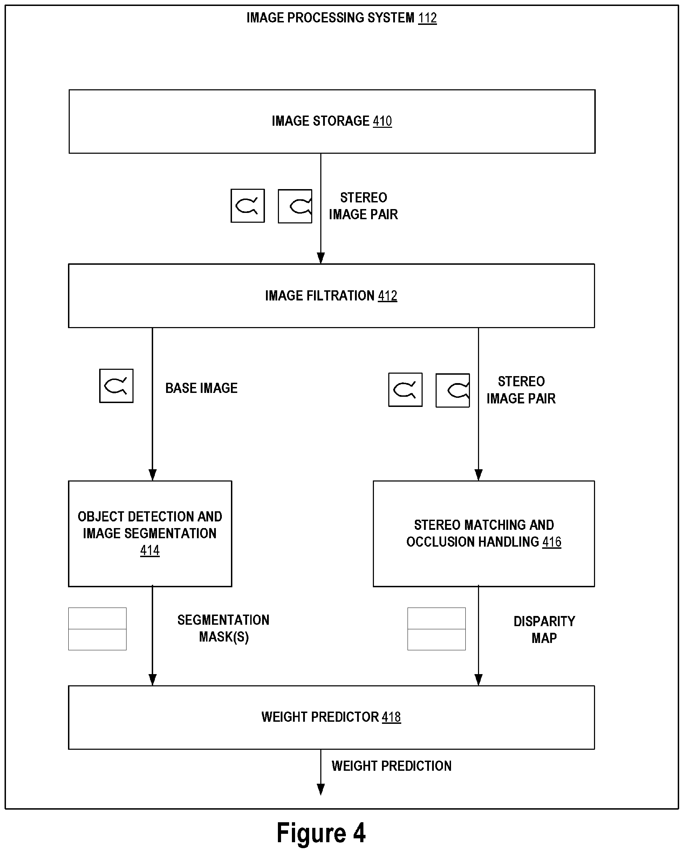

FIG. 4 is a schematic diagram showing high-level components of the image processing system 112. The system 112 includes image storage 410, image filtration system 412, object detection and image segmentation system 414, stereo matching and occlusion handling system 416, and weight predictor system 418.

At a high-level, operation of the system 112 may be as follows.

High-resolution monochrome or color rectified stereo images captured by the cameras 106 in the fish farming enclosure 104 are transmitted to image processing system 112 via a communication link established between wireless access points 108A and 108B. The images received by the image processing system 112 are stored in image storage 410 (e.g., one or more non-volatile and /or volatile memory devices.) Pairs of rectified stereo images are output (read) from image storage 410 and input to image filtration system 412.

Image filtration system 412 analyzes the input image pair, or alternatively one of the images in the pair, to make a preliminary, relatively low-processing cost determination of whether the image pair contains suitable images for further processing by system 112. If so, then the pair of images are input stereo matching and occlusion handling system 416.

Stereo matching and occlusion handling system 416 determines corresponding pairs of pixels in the stereo images and outputs a disparity map for the base image of the stereo pair.

Object detection and image segmentation system 414 detects fish in the input base image and produces one or more image segmentation masks corresponding to one or more landmark points and / or landmark areas of the fish detected in the base image.

In some embodiments, weight predictor system 418 obtains three-dimensional (3-D) world coordinates of points corresponding to pixels from the input disparity map output by the stereo matching and occlusion handling system 416. The 3-D world coordinates of points corresponding to pixels corresponding to the landmark point(s) and / or landmark area(s) of the fish are used to calculate one or more truss dimensions and / or one or more conventional dimensions of the fish. The calculated dimensions then used in a calculation to predict the weight of the fish.

As an alternative, instead of calculating the truss and / or conventional dimensions, the weight predictor 418 may generate a 3-D point cloud object from the 3-D world coordinates. The volume of the fish may be estimated from the 3-D point cloud and then the weight predicting based on the estimated volume and a predetermined density or density distribution of the fish (e.g., a known average density or density distribution of Atlantic Salmon.) As yet another alternative, a neural network-based approach can be used to map a 3-D point cloud to a biomass estimate using a sufficient large training set.

A threshold number of individual weight predictions determined (e.g., 1,000) for a period of time (e.g., a day) may be averaged. From this, a distribution of the average daily (or other time period) fish biomass in the fish farming enclosure 104 over an extended period of time (e.g., the past month) may be charted (e.g., as a histogram or other visual distribution presented in a web browser) to provide a visualization of whether the total fish biomass in the fish farming enclosure 104 is increasing, decreasing, or staying relatively constant over that extended period according to the aggregated individual estimates. A decreasing biomass may be indicative, for example, of fish that escaped the fish farming enclosure 104, a predator gained access to the fish farming enclosure 104, fish mortality, etc. An increasing biomass may be indicative that the fish are still growing and not yet ready for harvest. While a steady biomass distribution may be indicative that the fish are ready for harvest. Other applications of the individual biomass estimates are possible and the present invention is not limited to any particular application of the individual biomass estimates.

It should also be noted that the sampling strategy may vary depending on if the object detection and segmentation system 414 has the capability to uniquely identify fish 102 in the fish farming enclosure 104. For example, one or more features of a fish detected in an image may be used to uniquely identify the fish in the image. If that case, a weight prediction may not be determined for the fish if a weight prediction was recently obtained for the fish within a sampling window (e.g., the same day or the same week.) The sampling strategy, in this case, may be to predict the weight of each unique fish identified during the sampling window and avoid re-predicting the weight of a fish for which a weight prediction has already been made during the sampling window. By doing so, a more accurate average biomass may be calculated because double counting is avoided.

To produce rectified stereo images for input to stereo matching and occlusion handling system 416, cameras 106 may be calibrated underwater against a target of a known geometry such as a black and white checkered board of alternative squares that provides good contrast in underwater conditions. Other calibration techniques are possible and the present invention is not limited to any particular calibration techniques.

In some embodiments, stereo matching and occlusion handling system 416 detects pairs of corresponding pixels in the rectified stereo pair. From this, stereo matching and occlusion handling system 416 outputs a disparity map for the base image of the stereo pair. The disparity map may be an array of values, one value for each pixel in the base image, where each value numerical represents the disparity with respect to a corresponding pixel in the other (match) image of the stereo pair. A depth map for the base image may be derived from the disparity map using known techniques.

For example, the depth of a pixel in the base image may be calculated from a known focal length of the cameras 106, a known baseline distance between the cameras 106, and the disparity of the pixel in the base image and its corresponding pixel in the match image. The depth map may also be an array of values, one value for each pixel in the image, but where each value numerically represents the distance of the object in the image scene corresponding to the pixel from the cameras 106 (e.g., from the center of the lens of the camera that captured the base image.)

The pair of images may be rectified, either vertically or horizontally. The matching task performed by the stereo matching and occlusion handling system 416 is to match pixels in one of the stereo images (the base image) to corresponding pixels in the other stereo image (the match image) according to a disparity matching algorithm (e.g., basic block matching, semi-global block matching, etc.) The output of the matching task is a disparity map for the stereo image pair. A depth map may be calculated from the disparity map using basic geometrical calculations. The depth map contains per-pixel information relating to the distance of the surfaces of objects in the base image from a viewpoint (e.g., the center of the lens of the camera that captured the base image.)

One of the challenges to accurately estimating the weight of a fish in an image is occlusions. This challenge is magnified in the fish biomass estimation context because freely swimming fish 102 in the fish farming enclosure 104 may swim close to each other or in schools such that one fish occludes another as they swim in front of the cameras 106. In this case, it can be difficult to stereo match corresponding pixels in the stereo image pair because a portion of a fish that is visible in one of the images may not be visible in the other of the images because of occlusion.

To address this occlusion problem, a convolutional neural network is trained to aid the stereo matching task. In particular, the convolution neural network may be used to learn a similarity measure on small image patches of the base and match images. The network may be trained with a binary classification set having examples of similar and dissimilar pairs of patches. The output of the convolutional neural network may be used to initialize the stereo matching cost. Post-processing steps such as, for example, semi-global block matching, may follow to determine pixel or pixel region correspondence between the base and match images. In some embodiments, a depth map is extracted from the input stereo image pair based on stereo matching method described in the paper by J. Zbontar and Y. LeCun, "Stereo Matching by Training a Convolutional Neural Network to Compare Image Patches," JMLR 17(65): 1-32.

Object detection and image segmentation system 414 identifies the pixels in an image that corresponds to a landmark point or a landmark area of the fish. The output of the object detection and image segmentation system 414 may be one or more image segmentation masks for the image. For example, an image segmentation mask may be a binary mask where the binary mask is an array of values, each value corresponding to one of the pixels in the image, the value being 1 (or 0) to indicate that the corresponding pixel does correspond to a landmark point or a landmark area of the fish, or being the opposite binary value to indicate that the corresponding pixel does not correspond to a landmark point or a landmark area of the fish. Instead of binary values, confidence values may be used in the image segmentation mask. In addition, or as an alternative to representing an image segmentation using raster coordinates, an image segmentation may be represented by vector coordinates that indicate the outline area of a landmark point or a landmark area of the fish.

The object detection and image segmentation system 414 may output multiple image segmentation masks for the same input image corresponding to different landmark points and different landmark features detected in the image.

The object detection and image segmentation system 414 may include a convolutional neural network for analyzing an input image to perform classification on objects (fish) detected in the image. The convolutional neural network may be composed of an input layer, an output layer, and multiple hidden layers including convolutional layers that emulate in a computer the response of neurons in animals to visual stimuli.

Given an image, a convolutional neural network of the object detection and image segmentation system 414 may convolve the image by a number of convolution filters. Non-linear transformations (e.g., MaxPool and RELU) may then then be applied to the output of convolution. The convolutional neural network may perform the convolution and the non-linear transformations multiple times. The output of the final layer may then be sent to a Softmax layer that gives the probability of the image being of a particular class (e.g., an image of one or more fish). The object detection and image segmentation system 414 may discard the input image from further processing by system 112 if the probability that the image is not an image of one or more fish is above a threshold. (e.g., 80%).

Assuming the input image is not discarded by object detection and image segmentation system 414, may use a convolutional neural network to identify fish in the image via a bounding box. A bounding box may also be associated a label identifying the fish within the bounding box. The convolutional neural network may perform a selective search on the image through pixel windows of different sizes. For each size, the convolutional neural network attempts to group together adjacent pixels by texture, color, or intensity to identify fish in the image. This may result in a set of region proposals which may then be input to a convolutional neural network trained on images of fish with the locations of the fish within the image labeled to determine which regions contain fish and which do not.

As an alternative, it is also possible to detect fish, landmark points and / or landmark areas of the fish in the image without region proposals using a single stage method (e.g., YOLO, SSD, SSD with recurrent rolling convolution, deconvolutional single shot detector, or the like.) YOLO is described in the paper by J. Redmon, S. Divvala, R. Girschick and A. Farhadi, "You Only Look Once: Unified, Real-Time Object Detection," arXiv:1506.02640v5, May 9, 2016. SSD is described in the paper by W. Liu, D. Anguelov, D. Erhan, C. Szegedy, S. Reed, Cheng-Yang Fu and A. C. Berg, "SSD: Single Shot MultiBox Detector," arXiv:1512.02325v5, December 19, 2016. SSD with recurrent rolling convolution is described in the paper by J. Ren, X. Chen, J. Liu, W. Sun, J. Pang, Q. Yan, Y. Tai and L. Xu, "Accurate Single Stage Detector Using Recurrent Rolling Convolution," arXiv:1704:05776v1, April 19, 2017. Deconvolutional single shot detector is described in the paper by C. Fu, W. Liu, A. Ranga, A. Tyagi, A. Berg, "DSSD: Deconvolutional Single Shot Detector," arXiv:1701.06659v1, January 23, 2017.

The images of fish on which a convolutional neural network is trained may include images that are representative of images containing fish from which landmark point and landmark areas can be identified. For example, a convolutional neural network may be trained on images of fish that provide a full lateral view of the fish including the head and tail at various different yaw, roll, and pitch angles and at different sizes in the image representing different distances from the camera 106. Such training data may also be generated synthetically using a computer graphics application (e.g., a video gaming engine or a computer graphical animation application (e.g., Blender) in order to generate sufficient training data. A final layer of a convolutional neural network may include a support vector machine (SVM) that classifies the fish in each valid region. Such classification may include whether a full lateral view of a fish including both the head and the tail of the fish is detected in the region. Object detection and image segmentation system 314 may tighten the bounding box around a region of a fish by running a linear regression on the region. This produces new bounding box coordinates for the fish in the region.

In addition, or alternatively, a convolutional neural network, a classifier, and abounding box linear regressor may be jointly trained for greater accuracy. This may be accomplished by replacing the SVM classifier with a softmax layer on top of a convolutional neural network to output a classification for a valid region. The linear regressor layer may be added in parallel to the softmax layer to output bounding box coordinates for the valid region.

To speed up objection detection, it is also possible to leverage the convolutional feature maps used by a region-based detector such as Fast R-CNN, to generate region proposals such as is done with Faster R-CNN. For example, a single stage region-based detector may be used. Fast R-CNN is described in the paper by R. Girshick, "Fast R-CNN," arXiv: 1504.08083v2, September 27, 2015. Faster R-CNN is described in the paper by S. Ren, K. He, R. Girschick and J. Sun, "Faster R-CNN: Towards Real-Time Object Detection with Region Proposal Networks," arxiv: 1506.01497v3, January 6, 2016.

The bounding box of a full lateral view of a fish may be cropped from the image in which is detected. A convolutional neural network-based object detection may then be performed again on the cropped image to detect and obtain bounding boxes or image segmentation masks corresponding to the landmark points and the landmark areas of the fish in the copped image. For this, a trained convolutional neural network may be used. The convolutional neural network may be trained on tight images of fish (synthetically generated or images captured in situ from a camera) with the locations of the various landmark points and the landmark areas in the images labeled in the tight images.

Once a suitable cropped image is obtained, the object detection and image segmentation system 414 performs pixel level segmentation on the cropped image. This may be accomplished using a convolutional neural network that runs in parallel with a convolutional neural network for object detection such as Mask R-CNN. The output of this may be image segmentation masks for the locations of the detected landmark points and landmark areas in the image. Mask R-CNN is described in the paper by K. He, G. Gkioxari, P. Dollár and R. Girschik, "Mask R-CNN," arXiv: 1703.06870v3, January 24, 2018.

Weight predictor 418 combines the depth map output by stereo matching and occlusion handling system 416 with the image segmentation mask(s) generated by the object detection and image segmentation system 414. The combining is done to determine the location of the landmark point(s) and / or landmark area(s) in 3-D cartesian space This combining may be accomplished by superimposing the depth map on an image segmentation mask, or vice versa, on a pixel-by-pixel basis (pixelwise.)

For example, one or more truss dimensions 310 and / or one or more conventional dimensions 330 of the fish may then be calculated using planar geometry. For example, the distance of the truss dimension between landmark point (1) the posterior most part of the eye and landmark point (4) the origin of the dorsal fin may be calculated using the Pythagorean theorem given the x, y, and z coordinates in the 3D space for each landmark point. Weight predictor 418 may then predict the weight of the fish according to a regression equation using the one or more truss and /or one or more conventional dimensions. In this way, weight prediction of the fish 102 in the fish farming enclosure 104 may be made on an individual basis.

COMPUTER VISION TECHNIQUES FOR ESTIMATING UNEATEN FEED IN THE FISH FARMING ENCLOSURE

Waste of feed pellets is a serious problem in aquaculture. In part, this is because fish food accounts for a significant portion of a fish farmer's capital investment. Also, wasted feed pellets pollute the water and can make fish sick such as for example by causing gill damage. As mentioned above, a reason feed is wasted is because of the limited feedback on the consumption of dispensed feed pellets. As a result, fish farmers have a difficult time determining the amount of feed pellets that should be delivered at a given feeding time and at regular feeding intervals.

The present invention may encompass automatically estimating the amount of feed pellets dispensed in a fish farming enclosure that are uneaten and providing spatiotemporal feedback based on the estimates that help fish farmers determine how much feed should be dispensed in the fish farming enclosure at a next feeding. For example, a web dashboard may be presented in a user interface to the fish farmers where the web dashboard presents information about or derived from the estimated amount of uneaten feed pellets. Generally, feed pellets are dispensed at the water surface of the fish farming enclosure and sink toward the bottom of the fish farming enclosure. The feed pellets may be dispensed in different areas of the fish farming enclosure water surface. The area selected may affect the number of uneaten pellets depending on various conditions such as time of day and the current swimming patterns of the fish in the fish farming enclosure.

The process 500 begins by positioning 502 the cameras 106 at the bottom or substantially at the bottom of the fish farming enclosure 104. In this position, the camera can capture feed pellets dispensed at the water surface of the fish farming enclosure 104 that sink through the feeding fish 102 uneaten.

The image processing system 112 may contain a mass storage hard disk or other suitable mass storage non-volatile media for storing the video signal captured 504 by cameras 106 as compressed video files (e.g., AVI files).

The image processing system 112 may contain a pellet detection sub-system that detects 506 the pixels in a captured 502 video image that correspond to feed pellets. The output of the pellet detection sub-system may be one or more one or more bounding boxes for the image.

The pellet detection sub-system may include a convolutional neural network for analyzing an input image to perform classification on objects (e.g., pellets) detected in the image. The convolutional neural network may be composed of an input layer, an output layer, and multiple hidden layers including convolutional layers that emulate in a computer the response of neurons in animals to visual stimuli.

Given an image, a convolutional neural network of the pellet detection and image segmentation system may convolve the image by a number of convolution filters. Non-linear transformations (e.g., MaxPool and RELU) may then then be applied to the output of convolution. The convolutional neural network may perform the convolution and the non-linear transformations multiple times. The output of the final layer may then be sent to a Softmax layer that gives the probability of the image being of a particular class (e.g., an image of one or more pellets). The pellet detection sub-system may discard the input image from further processing by system 112 if the probability that the image is not an image of one or more pellets is above a threshold. (e.g., 80%).

Assuming the input image is not discarded by pellet detection sub-system, the sub-system may use a convolutional neural network to detect 506 feed pellets 114 in the image using bounding boxes. A bounding box may also be associated with a label identifying the bounding box as containing a feed pellet (as opposed to identifying the object as a fish or a bubble or other object).

The images of pellets on which a convolutional neural network is trained may include images that are representative of images containing pellets from which feed pellets can be identified. Such training data may be generated synthetically using a computer graphics application (e.g., a video gaming engine or a computer graphical animation application (e.g., Blender) in order to generate sufficient training data.

After obtaining the bounding boxes for pellets detected 506 in a captured 504 video image, the number of feed pellets is counted 508. This can be done simply by counting the number of bounding boxes corresponding to pellets detected 506 in the image. This number (or a metric based on thereon) may be provide to a computer that regulates the controller of a fish food feeding machine to provide precise fish food quantity in the next feeding process.

In the above process 500, the camera 106 is positioned at or near the bottom of the fish farming enclosure 104 to capture video of feed pellets that sink through fish 102 feeding near the surface and fall toward the bottom on the fish farming enclosure 104 uneaten. However, it is also possible to position the camera 106 at or near the surface of the fish farming enclosure 104 during feeding. In this case, the system 112 may count the number of feed pellets 114 detected over the feeding period and an estimate of the number or amount of uneaten pellets can be determined based on a difference between a number of feed pellets detected at a beginning of the feeding period and a number of feed pellets remaining that are detected at the end of the feeding period. The start and end of the feeding period may also be automatically determined by system 112 based on the classified activity of fish 102.

EXAMPLE HARDWARE IMPLEMENTING MECHANISM FOR OPTIMAL FEEDING

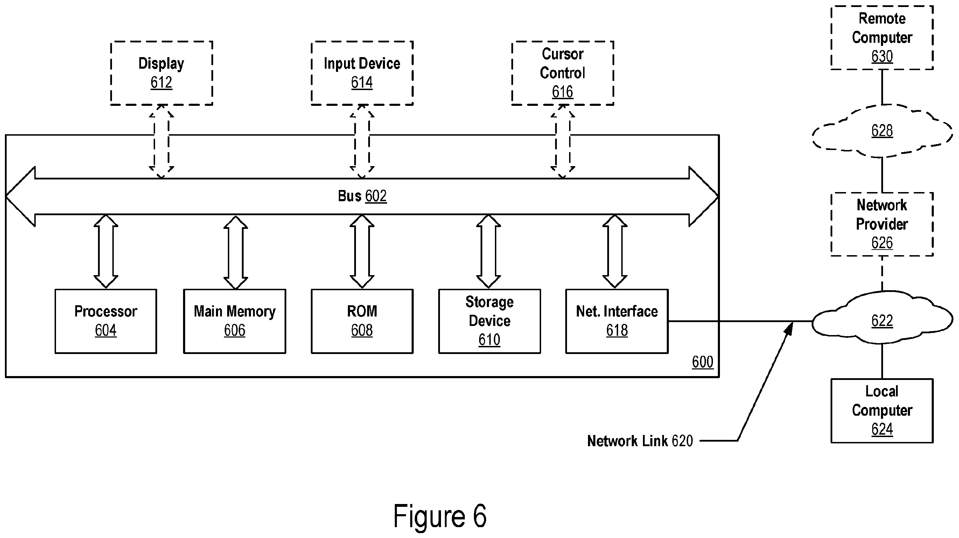

FIG. 6 is a block diagram that illustrates a computer system 600 with which some embodiments of the present invention may be implemented. Computer system 600 includes a bus 602 or other communication mechanism for communicating information, and a hardware processor 604 coupled with bus 602 for processing information. Hardware processor 604 may be, for example, a general-purpose microprocessor, a central processing unit (CPU) or a core thereof, a graphics processing unit (GPU), or a system on a chip (SoC).

Computer system 600 also includes a main memory 606, typically implemented by one or more volatile memory devices, coupled to bus 602 for storing information and instructions to be executed by processor 604. Main memory 606 also may be used for storing temporary variables or other intermediate information during execution of instructions by processor 604. Computer system 600 may also include a read-only memory (ROM) 608 or other static storage device coupled to bus 602 for storing static information and instructions for processor 604. A storage device 610, typically implemented by one or more non-volatile memory devices, is provided and coupled to bus 602 for storing information and instructions.

Computer system 600 may be coupled via bus 602 to a display 612, such as a liquid crystal display (LCD), a light emitting diode (LED) display, or a cathode ray tube (CRT), for displaying information to a computer user. Display 612 may be combined with a touch sensitive surface to form a touch screen display. The touch sensitive surface is an input device for communicating information including direction information and command selections to processor 604 and for controlling cursor movement on display 612 via touch input directed to the touch sensitive surface such by tactile or haptic contact with the touch sensitive surface by a user's finger, fingers, or hand or by a hand-held stylus or pen. The touch sensitive surface may be implemented using a variety of different touch detection and location technologies including, for example, resistive, capacitive, surface acoustical wave (SAW) or infrared technology.

An input device 614, including alphanumeric and other keys, may be coupled to bus 602 for communicating information and command selections to processor 604.

Another type of user input device may be cursor control 616, such as a mouse, a trackball, or cursor direction keys for communicating direction information and command selections to processor 604 and for controlling cursor movement on display 612. This input device typically has two degrees of freedom in two axes, a first axis (e.g., x) and a second axis (e.g., y), that allows the device to specify positions in a plane.

Instructions, when stored in non-transitory storage media accessible to processor 604, such as, for example, main memory 606 or storage device 610, render computer system 600 into a special-purpose machine that is customized to perform the operations specified in the instructions. Alternatively, customized hard-wired logic, one or more ASICs or FPGAs, firmware and/or hardware logic which in combination with the computer system causes or programs computer system 600 to be a special-purpose machine.

A computer-implemented process may be performed by computer system 600 in response to processor 604 executing one or more sequences of one or more instructions contained in main memory 606. Such instructions may be read into main memory 606 from another storage medium, such as storage device 610. Execution of the sequences of instructions contained in main memory 606 causes processor 604 to perform the process. Alternatively, hard-wired circuitry may be used in place of or in combination with software instructions to perform the process.

The term "storage media" as used herein refers to any non-transitory media that store data and/or instructions that cause a machine to operate in a specific fashion. Such storage media may comprise non-volatile media (e.g., storage device 610) and/or volatile media (e.g., main memory 606). Non-volatile media includes, for example, read-only memory (e.g., EEPROM), flash memory (e.g., solid-state drives), magnetic storage devices (e.g., hard disk drives), and optical discs (e.g., CD-ROM). Volatile media includes, for example, random-access memory devices, dynamic random-access memory devices (e.g., DRAM) and static random-access memory devices (e.g., SRAM).

Storage media is distinct from but may be used in conjunction with transmission media. Transmission media participates in transferring information between storage media. For example, transmission media includes coaxial cables, copper wire and fiber optics, including the circuitry that comprise bus 602. Transmission media can also take the form of acoustic or light waves, such as those generated during radio-wave and infra-red data communications.

Computer system 600 also includes a network interface 618 coupled to bus 602. Network interface 618 provides a two-way data communication coupling to a wired or wireless network link 620 that is connected to a local, cellular or mobile network 422. For example, communication interface 618 may be IEEE 302.3 wired "ethernet" card, an IEEE 302.11 wireless local area network (WLAN) card, a IEEE 302.15 wireless personal area network (e.g., Bluetooth) card or a cellular network (e.g., GSM, LTE, etc.) card to provide a data communication connection to a compatible wired or wireless network. In any such implementation, communication interface 618 sends and receives electrical, electromagnetic or optical signals that carry digital data streams representing various types of information.

Network link 620 typically provides data communication through one or more networks to other data devices. For example, network link 620 may provide a connection through network 622 to a local computer system 624 that is also connected to network 622 or to data communication equipment operated by a network access provider 626 such as, for example, an internet service provider or a cellular network provider. Network access provider 626 in turn provides data communication connectivity to another data communications network 628 (e.g., the internet). Networks 622 and 628 both use electrical, electromagnetic or optical signals that carry digital data streams. The signals through the various networks and the signals on network link 620 and through communication interface 618, which carry the digital data to and from computer system 600, are example forms of transmission media.

Computer system 600 can send messages and receive data, including program code, through the networks 622 and 628, network link 620 and communication interface 618. In the internet example, a remote computer system 630 might transmit a requested code for an application program through network 628, network 622 and communication interface 618. The received code may be executed by processor 604 as it is received, and/or stored in storage device 610, or other non-volatile storage for later execution.

In the foregoing specification, the embodiments have been described with reference to numerous specific details that may vary from implementation to implementation. The specification and drawings are, accordingly, to be regarded in an illustrative rather than a restrictive sense.

**Claims**

1. A system for optimizing feeding of freely swimming fish (102) in a fish farming enclosure (104) in an aquaculture environment (100), the system comprising:

   a stereo digital camera (106) for immersion underwater in the fish farming enclosure and for capturing digital images of freely swimming fish in the fish farming enclosure;
   an image processing system (112) of, or operatively coupled to, the stereo digital camera, the image processing system comprising one or more processors, storage media, and one or more programs stored in the storage media and configured for execution by the one or more processors;
   a feed optimization system of, or operatively coupled to, the image processing system, the feed optimization system comprising one or more processors, storage media, and one or more programs stored in the storage media and configured for execution by the one or more processors;
   wherein the one or more programs of the image processing system are configured to use a trained convolutional artificial neural network to compute a depth map from digital images captured by the stereo digital camera depicting freely swimming fish;
   wherein the one or more programs of the image processing system are configured to generate biomass estimates based on the depth map computed using the trained convolutional artificial neural network from digital images captured by the stereo digital camera;
   wherein the one or more programs of the feed optimization system are configured to:

      receive the biomass estimates from the image processing system;
      determine a feed dosage based on a feed optimization model and the biomass estimates, the feed dosage being a feed dosage rate or a feed dosage amount; and
      cause a feed doser system to dispense an amount of feed into the fish farming enclosure based on the feed dosage.

2. The system of claim 1, wherein the one or more programs of the image processing system are configured to generate uneaten feed estimates based on digital images captured by the stereo digital camera; and wherein the one or more programs of the feed optimization system are configured to: receive the uneaten feed estimates from the image processing system; and determine the feed dosage amount based on the feed optimization model, the biomass estimates, and the uneaten feed estimates.

3. The system of claim 1, wherein the one or more programs of the feed optimization system are configured to:

   receive temperature readings by a temperature sensor immersed underwater in the fish farming enclosure; and
   determine the feed dosage amount based on the feed optimization model, the biomass estimates, and the temperature readings.

4. The system of claim 1, wherein the one or more programs of the feed optimization system are configured to:

   receive dissolved oxygen readings by a dissolved oxygen sensor immersed underwater in the fish farming enclosure; and
   determine the feed dosage amount based on the feed optimization model, the biomass estimates, and the dissolved oxygen readings.

5. The system of claim 1, wherein the one or more programs of the feed optimization system are configured to:

   receive a feed dispense rate from a feed doser system for dispensing feed into the fish farming enclosure; and
   determine the feed dosage amount based on the feed optimization model, the biomass estimates, and the feed dispense rate.

6. The system of claim 1, wherein the one or more programs of the image processing system are configured to:

use a trained convolutional artificial neural network to detect feed pellet objects in digital images captured by the stereo digital camera;
count a number of feed pellet objects that are detected in digital images captured by the stereo digital camera using the convolutional artificial neural network trained to detect feed pellet objects;
compute an uneaten feed estimate based on the number of feed pellet objects counted; and
provide the uneaten feed estimate to the feed optimization system.

7. The system of claim 1, wherein the one or more programs of the image processing system are configured to:

based on obtaining and storing a pair of digital images captured by, or derived from digital images captured by, the stereo digital camera, use the trained convolutional artificial neural network to classify an image region of a digital image, of the pair of digital images, as containing an image of a fish;
crop the digital image to the image region to generate a cropped image;
identify a plurality of landmark points on the fish within the cropped image;
determine a plurality of disparity map values corresponding to at least the plurality of landmark points;
based on the plurality of disparity map values, calculate one or more morphological body dimensions of the fish;
compute a weight of the fish based on the one or more morphological body dimensions;
compute the biomass estimates based on the weight of the fish computed; and
provide the biomass estimates to the feed optimization system.

8. The system of claim 1, wherein the one or more programs of the feed optimization system are configured to:

determine the feed dosage for a particular type of feed based on a feed optimization model and the biomass estimates; and
cause the feed doser system to dispense an amount of feed of the particular type of feed into the fish farming enclosure selected based on the feed dosage.

9. A computer-implemented method for optimizing feeding of freely swimming fish in a fish farming enclosure in an aquaculture environment, the method comprising:

using a trained convolutional artificial neural network to compute a depth map from digital images of freely swimming fish captured by a stereo digital camera immersed underwater in the fish farming enclosure;
generating biomass estimates based on the depth map computed using the trained convolutional artificial neural network based on digital images of freely swimming fish captured by the stereo digital camera immersed underwater in the fish farming enclosure;
determining a feed dosage based on a feed optimization model and the biomass estimates, the feed dosage being a feed dosage rate or a feed dosage amount; and
causing a feed doser system to dispense an amount of feed into the fish farming enclosure based on the feed dosage.

10. The computer-implemented method of claim 9, further comprising:

using a trained convolutional artificial neural network to detect feed pellet objects in digital images captured by the stereo digital camera;
determining an uneaten feed estimate based on the feed pellet objects detected; and
determine the feed dosage amount based on the feed optimization model, the biomass estimates, and the uneaten feed estimates.

11. The computer-implemented method of claim 9, further comprising:

obtaining and storing a pair of digital images captured by, or derived from digital images captured by, the stereo digital camera;
using the trained convolutional artificial neural network to classify an image region of a digital image, of the pair of digital images, as containing an image of a fish;

cropping the digital image to the image region to generate a cropped image;
identifying a plurality of landmark points on the fish within the cropped image;
determining a plurality of disparity map values corresponding to at least the plurality of landmark points;
calculating one or more morphological body dimensions of the fish based on the plurality of disparity map values;
computing a weight of the fish based on the one or more morphological body dimensions; and
computing the biomass estimates based on the weight of the fish computed.

12. The computer-implemented method of claim 9, further comprising:

receiving temperature readings by a temperature sensor immersed underwater in the fish farming enclosure; and
determining the feed dosage amount based on the feed optimization model, the biomass estimates, and the temperature readings.

13. The computer-implemented method of claim 9, further comprising:

receiving dissolved oxygen readings by a dissolved oxygen sensor immersed underwater in the fish farming enclosure; and
determining the feed dosage amount based on the feed optimization model, the biomass estimates, and the dissolved oxygen readings.

14. The system of claim 1, wherein the image processing system computes, using the depth map, points in a three-dimensional world cartesian coordinate system of landmark points of a fish, or three-dimensional point cloud objects.

15. The system of claim 14 comprising a neural network trained to compute a biomass estimate from the three-dimensional point cloud objects.

**Patentansprüche**

1. System zur Optimierung der Fütterung von frei schwimmenden Fischen (102) in einem Fischzuchtgehäuse (104) in einer Aquakulturumgebung (100), das System umfassend:

eine digitale Stereokamera (106) zum Eintauchen unter Wasser in das Fischzuchtgehäuse und zum Aufnehmen digitaler Bilder von frei schwimmenden Fischen im Fischzuchtgehäuse;
ein Bildverarbeitungssystem (112) der digitalen Stereokamera oder operativ damit gekoppelt, wobei das Bildverarbeitungssystem einen oder mehrere Prozessoren, Speichermedien und ein oder mehrere Programme umfasst, die in den Speichermedien gespeichert und zur Ausführung durch den einen oder die mehreren Prozessoren konfiguriert sind;
ein Fütterungsoptimierungssystem des Bildverarbeitungssystems oder operativ damit gekoppelt, wobei das Fütterungsoptimierungssystem einen oder mehrere Prozessoren, Speichermedien und ein oder mehrere Programme umfasst, die in den Speichermedien gespeichert und zur Ausführung durch den einen oder die mehreren Prozessoren konfiguriert sind;
wobei das eine oder die mehreren Programme des Bildverarbeitungssystems so konfiguriert sind, dass sie ein trainiertes neuronales Faltungsnetzwerk verwenden, um eine Tiefenkarte aus digitalen Bildern zu berechnen, die von der digitalen Stereokamera aufgenommen wurden und frei schwimmende Fische darstellen;
wobei das eine oder die mehreren Programme des Bildverarbeitungssystems so konfiguriert sind, dass sie Biomassenschätzungen basierend auf der Tiefenkarte erzeugen, die mithilfe des trainierten neuronalen Faltungsnetzwerks aus digitalen Bildern berechnet wurde, die von der digitalen Stereokamera aufgenommen wurden;
wobei das eine oder die mehreren Programme des Fütterungsoptimierungssystems konfiguriert sind zum:
Empfangen der Biomassenschätzungen vom Bildverarbeitungssystem;
Bestimmen einer Futterdosierung basierend auf einem Futteroptimierungsmodell und den Biomassenschätzungen, wobei die Futterdosierung eine Futterdosierungsrate oder eine Futterdosierungsmenge ist; und
Bewirken, dass ein Futterdosiersystem basierend auf der Futterdosierung eine Menge an Futter in das Fischzuchtgehäuse abgibt.

2. System nach Anspruch 1, wobei das eine oder die mehreren Programme des Bildverarbeitungssystems so konfiguriert sind, dass sie basierend auf digitalen Bildern, die von der digitalen Stereokamera aufgenommen wurden, Schätzungen für nicht gefressenes Futter erzeugen; wobei das eine oder die mehreren Programme des Fütterungsoptimierungssystems konfiguriert sind zum: Empfangen der Schätzungen für nicht gefressenes Futter vom Bildverarbeitungssystem; und
Bestimmen der Futterdosierungsmenge basierend auf dem Futteroptimierungsmodell, den Biomassenschätzungen und den Schätzungen für nicht gefressenes Futter.

3. System nach Anspruch 1, wobei das eine oder die mehreren Programme des Fütterungsoptimierungssystems konfiguriert sind zum:

Empfangen von Temperaturablesungen durch einen Temperatursensor, der unter Wasser in das Fischzuchtgehäuse eingetaucht ist; und
Bestimmen der Futterdosierungsmenge basierend auf dem Futteroptimierungsmodell, den Biomassenschätzungen und den Temperaturablesungen.

4. System nach Anspruch 1, wobei das eine oder die mehreren Programme des Fütterungsoptimierungssystems konfiguriert sind zum:

Empfangen von Ablesungen des gelösten Sauerstoffs durch einen Sensor für gelösten Sauerstoff, der im Fischzuchtgehäuse unter Wasser getaucht ist; und
Bestimmen der Futterdosierungsmenge basierend auf dem Futteroptimierungsmodell, den Biomassenschätzungen und den Ablesungen für gelösten Sauerstoff.

5. System nach Anspruch 1, wobei das eine oder die mehreren Programme des Fütterungsoptimierungssystems konfiguriert sind zum:

Empfangen einer Futterausgeberrate von einem Futterdosiersystem zur Abgabe von Futter in das Fischzuchtgehäuse; und
Bestimmen der Futterdosierungsmenge basierend auf dem Futteroptimierungsmodell, den Biomassenschätzungen und der Futterausgeberrate.

6. System nach Anspruch 1, wobei das eine oder die mehreren Programme des Bildverarbeitungssystems konfiguriert sind zum:

Verwenden eines trainierten neuronalen Faltungsnetzwerks zum Feststellen von Objekten mit Futterpellets in digitalen Bildern, die von der digitalen Stereokamera aufgenommen wurden;
Zählen einer Anzahl von Objekten von Futterpellets, die in den von der digitalen Stereokamera aufgenommenen digitalen Bildern festgestellt werden, mithilfe des neuronalen Faltungsnetzwerks, das für die Feststellung von Objekten von Futterpellets trainiert wurde;
Berechnen einer Schätzung für nicht gefressenes Futter basierend auf der Anzahl der gezählten Objekte mit Futterpellets; und
Bereitstellen der Schätzung für nicht gefressenes Futter für das Futteroptimierungssystem.

7. System nach Anspruch 1, wobei das eine oder die mehreren Programme des Bildverarbeitungssystems konfiguriert sind um:

basierend auf dem Erhalten und Speichern eines Paares digitaler Bilder, die von der digitalen Stereokamera aufgenommen wurden oder von digitalen Bildern abgeleitet wurden, Verwenden des trainierten neuronalen Faltungsnetzwerks, um einen Bildbereich eines digitalen Bildes des Paares digitaler Bilder als ein Bild eines Fisches enthaltend zu klassifizieren;
Zuschneiden des digitalen Bildes auf den Bildbereich, um ein zugeschnittenes Bild zu erzeugen;
Identifizieren einer Vielzahl von Markierungspunkten auf dem Fisch innerhalb des zugeschnittenen Bildes;
Bestimmen einer Vielzahl von Disparitätskartenwerten, die mindestens der Vielzahl von Markierungspunkten entsprechen;
basierend auf der Vielzahl von Disparitätskartenwerten, Berechnen einer oder mehrerer morphologischer Körpermessungen des Fisches;
Berechnen des Gewichtes des Fisches basierend auf einer oder mehreren morphologischen Körpermessungen;
Berechnen der Biomassenschätzung basierend auf dem Gewicht der berechneten Fische; und
Bereitstellen der Biomassenschätzungen für das Fütterungsoptim ierungssystem.

8. System nach Anspruch 1, wobei das eine oder die mehreren Programme des Fütterungsoptimierungssystems konfiguriert sind zum:

Bestimmen der Futterdosierung für einen bestimmten Typ von Futter basierend auf einem Futteroptimierungsmodell und den Biomassenschätzungen; und
Veranlassen des Futterdosierungssystems, eine Menge von Futter des bestimmten Typs in das Fischzuchtgehäuse zuzuführen, die auf der Futterdosierung basiert.

9. Computerimplementiertes Verfahren zur Optimierung der Fütterung von frei schwimmenden Fischen in einem Fischzuchtgehäuse in einer Aquakulturumgebung, das Verfahren umfassend:

Verwenden eines trainierten neuronalen Faltungsnetzwerks, um eine Tiefenkarte aus digitalen Bildern von frei schwimmenden Fischen zu berechnen, die von einer digitalen Stereokamera aufgenommen wurden, die unter Wasser im Fischzuchtgehäuse eingetaucht wurde;
Erzeugen von Biomassenschätzungen basierend auf der Tiefenkarte, die mithilfe des trainierten neuronalen Faltungsnetzwerks berechnet wurde, das auf digitalen Bildern von frei schwimmenden Fischen basiert, die von der digitalen Stereokamera aufgenommen wurden, die unter Wasser in das Fischzuchtgehäuse getaucht wurde;
Bestimmen einer Futterdosierung basierend auf einem Futteroptimierungsmodell und den Biomassenschätzungen, wobei die Futterdosierung eine Futterdosierungsrate oder eine Futterdosierungsmenge ist; und
Bewirken, dass ein Futterdosiersystem basierend auf der Futterdosierung eine Menge an Futter in das Fischzuchtgehäuse abgibt.

10. Computerimplementiertes Verfahren nach Anspruch 9, ferner umfassend:

Verwenden eines trainierten neuronalen Faltungsnetzwerks zum Feststellen von Objekten mit Futterpellets in digitalen Bildern, die von der digitalen Stereokamera aufgenommen wurden;
Bestimmen einer Schätzung für nicht gefressenes Futter basierend auf den festgestellten Objekten für Futterpellets; und
Bestimmen der Futterdosierungsmenge basierend auf dem Futteroptimierungsmodell, den Biomassenschätzungen und den Schätzungen für nicht gefressenes Futter.

11. Computerimplementiertes Verfahren nach Anspruch 9, ferner umfassend:

Erhalten und Speichern eines Paares digitaler Bilder, die von der digitalen Stereokamera aufgenommen wurden oder von digitalen Bildern abgeleitet wurden, die von der digitalen Stereokamera aufgenommen wurden;
Verwenden des trainierten neuronalen Faltungsnetzwerks, um einen Bildbereich eines digitalen Bildes des digitalen Bildpaares als ein Bild eines Fisches zu klassifizieren;
Zuschneiden des digitalen Bildes auf den Bildbereich, um ein zugeschnittes Bild zu erzeugen;
Identifizieren einer Vielzahl von Markierungspunkten auf dem Fisch innerhalb des zugeschnittenen Bildes;
Bestimmen einer Vielzahl von Disparitätskartenwerten, die mindestens der Vielzahl von Markierungspunkten entsprechen;
Berechnen einer oder mehrerer morphologischer Körpermessungen des Fisches basierend auf der Vielzahl von Disparitätskartenwerten;
Berechnen des Gewichtes des Fisches basierend auf einer oder mehreren morphologischen Körpermessungen; und
Berechnen der Biomassenschätzung basierend auf dem Gewicht der berechneten Fische.

12. Computerimplementiertes Verfahren nach Anspruch 9, ferner umfassend:

Empfangen von Temperaturablesungen durch einen Temperatursensor, der unter Wasser in das Fischzuchtgehäuse eingetaucht ist; und
Bestimmen der Futterdosierungsmenge basierend auf dem Futteroptimierungsmodell, den Biomassenschätzungen und den Temperaturablesungen.

13. Computerimplementiertes Verfahren nach Anspruch 9, ferner umfassend:

Empfangen von Ablesungen des gelösten Sauerstoffs durch einen Sensor für gelösten Sauerstoff, der im Fischzuchtgehäuse unter Wasser getaucht ist; und

Bestimmen der Futterdosierungsmenge basierend auf dem Futteroptimierungsmodell, den Biomassenschätzungen und den Ablesungen für gelösten Sauerstoff.

**14.** System nach Anspruch 1, wobei das Bildverarbeitungssystem mithilfe der Tiefenkarte Punkte in einem dreidimensionalen kartesischen Weltkoordinatensystem von Markierungspunkten eines Fisches oder dreidimensionalen Objekten der Punktwolke berechnet.

**15.** System nach Anspruch 14, umfassend ein neuronales Netzwerk, das trainiert wurde, um eine Biomassenschätzung aus den dreidimensionalen Objekten der Punktwolke zu berechnen.

**Revendications**

**1.** Système d'optimisation d'alimentation de poissons nageant librement (102) dans une enceinte de pisciculture (104) dans un environnement d'aquaculture (100), le système comprenant :

une caméra numérique stéréo (106) pour immersion sous l'eau dans l'enceinte de pisciculture et pour capturer des images numériques de poissons nageant librement dans l'enceinte de pisciculture ;
un système de traitement d'image (112) de la caméra numérique stéréo ou couplé fonctionnellement à celle-ci, le système de traitement d'image comprenant un ou plusieurs processeurs, un support de stockage et un ou plusieurs programmes stockés dans le support de stockage et configurés pour être exécutés par le ou les processeurs ;
un système d'optimisation d'alimentation du système de traitement d'image ou couplé fonctionnellement à celui-ci, le système d'optimisation d'alimentation comprenant un ou plusieurs processeurs, un support de stockage et un ou plusieurs programmes stockés dans le support de stockage et configurés pour être exécutés par le ou les processeurs ;
dans lequel le ou les programmes du système de traitement d'image sont configurés pour utiliser un réseau neuronal artificiel convolutif entraîné pour calculer de manière électronique une carte de profondeur à partir d'images numériques capturées par la caméra numérique stéréo représentant les poissons nageant librement ;
dans lequel le ou les programmes du système de traitement d'image sont configurés pour générer des estimations de biomasse sur la base de la carte de profondeur calculée de manière électronique à l'aide du réseau neuronal artificiel convolutif entraîné à partir d'images numériques capturées par la caméra numérique stéréo ;
dans lequel le ou les programmes du système d'optimisation d'alimentation sont configurés pour :

recevoir les estimations de biomasse à partir du système de traitement d'image ;
déterminer un dosage d'alimentation sur la base d'un modèle d'optimisation d'alimentation et des estimations de biomasse, le dosage d'alimentation étant un taux de dosage d'alimentation ou une quantité de dosage d'alimentation ; et
amener un système de doseur d'alimentation à distribuer une quantité d'alimentation dans l'enceinte de pisciculture sur la base du dosage d'alimentation.

**2.** Système selon la revendication 1, dans lequel le ou les programmes du système de traitement d'image sont configurés pour générer des estimations d'alimentation non consommée sur la base d'images numériques capturées par la caméra numérique stéréo ; et dans lequel le ou les programmes du système d'optimisation d'alimentation sont configurés pour : recevoir les estimations d'alimentation non consommée à partir du système de traitement d'image ; et
déterminer la quantité de dosage d'alimentation sur la base du modèle d'optimisation d'alimentation, des estimations de biomasse et des estimations d'alimentation non consommée.

**3.** Système selon la revendication 1, dans lequel le ou les programmes du système d'optimisation d'alimentation sont configurés pour :

recevoir des relevés de température par un capteur de température immergé sous l'eau dans l'enceinte de pisciculture ; et
déterminer la quantité de dosage d'alimentation sur la base du modèle d'optimisation d'alimentation, des estimations de biomasse et des relevés de température.

**4.** Système selon la revendication 1, dans lequel le ou les programmes du système d'optimisation d'alimentation sont configurés pour :

recevoir des relevés d'oxygène dissous par un capteur d'oxygène dissous immergé sous l'eau dans l'enceinte de pisciculture ; et
déterminer la quantité de dosage d'alimentation sur la base du modèle d'optimisation d'alimentation, des estimations de biomasse et des relevés d'oxygène dissous.

5. Système selon la revendication 1, dans lequel le ou les programmes du système d'optimisation d'alimentation sont configurés pour :

recevoir un taux de distribution d'alimentation à partir d'un système de doseur d'alimentation pour distribuer l'alimentation dans l'enceinte de pisciculture ; et
déterminer la quantité de dosage d'alimentation sur la base du modèle d'optimisation d'alimentation, des estimations de biomasse et du taux de distribution d'alimentation.

6. Système selon la revendication 1, dans lequel le ou les programmes du système de traitement d'image sont configurés pour :

utiliser un réseau neuronal artificiel convolutif entraîné pour détecter des objets de granulé d'alimentation dans des images numériques capturées par la caméra numérique stéréo ;
compter un nombre d'objets de granulé d'alimentation qui sont détectés dans des images numériques capturées par la caméra numérique stéréo à l'aide du réseau neuronal artificiel convolutif entraîné pour détecter des objets de granulé d'alimentation ;
calculer de manière électronique une estimation d'alimentation non consommée sur la base du nombre d'objets de granulé d'alimentation compté ; et
fournir l'estimation d'alimentation non consommée au système d'optimisation d'alimentation.

7. Système selon la revendication 1, dans lequel le ou les programmes du système de traitement d'image sont configurés pour :

sur la base de l'obtention et du stockage d'une paire d'images numériques capturées par la caméra numérique stéréo ou issues d'images numériques capturées par celle-ci, utiliser le réseau neuronal artificiel convolutif entraîné pour classer une région d'image d'une image numérique, de la paire d'images numériques, comme contenant une image d'un poisson ;
recadrer l'image numérique sur la région d'image pour générer une image recadrée ;
identifier une pluralité de points de repère sur le poisson à l'intérieur de l'image recadrée ;
déterminer une pluralité de valeurs de carte de disparité correspondant à au moins la pluralité de points de repère ;
sur la base de la pluralité de valeurs de carte de disparité, calculer une ou plusieurs dimensions morphologiques de corps du poisson ;
calculer de manière électronique un poids du poisson sur la base de la ou des dimensions morphologiques du corps ;
calculer de manière électronique les estimations de biomasse sur la base du poids du poisson calculé de manière électronique ; et
fournir les estimations de biomasse au système d'optimisation d'alimentation.

8. Système selon la revendication 1, dans lequel le ou les programmes du système d'optimisation d'alimentation sont configurés pour :

déterminer le dosage d'alimentation pour un type particulier d'alimentation sur la base d'un modèle d'optimisation d'alimentation et des estimations de biomasse ; et
amener le système de doseur d'alimentation à distribuer une quantité d'alimentation du type particulier d'alimentation dans l'enceinte de pisciculture sélectionnée sur la base du dosage d'alimentation.

9. Procédé mis en oeuvre par ordinateur pour optimiser l'alimentation de poissons nageant librement dans une enceinte de pisciculture dans un environnement d'aquaculture, le procédé comprenant :

l'utilisation d'un réseau neuronal artificiel convolutif entraîné pour calculer de manière électronique une carte de profondeur à partir d'images numériques de poissons nageant librement capturées par une caméra numérique stéréo immergée sous l'eau dans l'enceinte de pisciculture ;
la génération d'estimations de biomasse sur la base de la carte de profondeur calculée de manière électronique à l'aide du réseau neuronal artificiel convolutif entraîné sur la base d'images numériques de poissons nageant librement capturées par la caméra numérique stéréo immergée sous l'eau dans l'enceinte de pisciculture ;
la détermination d'un dosage d'alimentation sur la base d'un modèle d'optimisation d'alimentation et des estimations de biomasse, le dosage d'alimentation étant un taux de dosage d'alimentation ou une quantité de dosage d'alimentation ; et
le fait d'amener un système de doseur d'alimentation à distribuer une quantité d'alimentation dans l'enceinte de pisciculture sur la base du dosage d'alimentation.

10. Procédé mis en oeuvre par ordinateur selon la revendication 9, comprenant en outre :

l'utilisation d'un réseau neuronal artificiel convolutif entraîné pour détecter des objets de granulé d'alimentation dans des images numériques capturées par la caméra numérique stéréo ;
la détermination d'une estimation d'alimentation non consommée sur la base des objets de granulé d'alimentation détectés ; et
déterminer la quantité de dosage d'alimentation sur la base du modèle d'optimisation d'alimentation, des estimations de biomasse et des estimations d'alimentation non consommée.

11. Procédé mis en oeuvre par ordinateur selon la revendication 9, comprenant en outre :

l'obtention et le stockage d'une paire d'images numériques capturées par la caméra numérique stéréo ou issues à partir d'images numériques capturées par celle-ci ;
l'utilisation du réseau neuronal artificiel convolutif entraîné pour classer une région d'image d'une image numérique, de la paire d'images numériques, comme contenant une image d'un poisson ;
le recadrage de l'image numérique sur la région d'image pour générer une image recadrée ;
l'identification d'une pluralité de points de repère sur le poisson à l'intérieur de l'image recadrée ;
la détermination d'une pluralité de valeurs de carte de disparité correspondant à au moins la pluralité de points de repère ;
le calcul d'une ou plusieurs dimensions morphologiques du corps du poisson sur la base de la pluralité de valeurs de carte de disparité ;
le calcul électronique d'un poids du poisson sur la base de la ou des dimensions morphologiques du corps ; et
le calcul électronique des estimations de biomasse sur la base du poids du poisson calculé de manière électronique.

12. Procédé mis en oeuvre par ordinateur selon la revendication 9, comprenant en outre :

la réception des relevés de température par un capteur de température immergé sous l'eau dans l'enceinte de pisciculture ; et
la détermination de la quantité de dosage d'alimentation sur la base du modèle d'optimisation d'alimentation, des estimations de biomasse et des relevés de température.

13. Procédé mis en oeuvre par ordinateur selon la revendication 9, comprenant en outre :

la réception de relevés d'oxygène dissous par un capteur d'oxygène dissous immergé sous l'eau dans l'enceinte de pisciculture ; et
la détermination de la quantité de dosage d'alimentation sur la base du modèle d'optimisation d'alimentation, des estimations de biomasse et des relevés d'oxygène dissous.

14. Système selon la revendication 1, dans lequel le système de traitement d'image calcule de manière électronique, à l'aide de la carte de profondeur, des points dans un système de coordonnées cartésiennes de monde tridimensionnel de points de repère d'un poisson, ou d'objets de nuage de points tridimensionnel.

15. Système selon la revendication 14 comprenant un réseau neuronal entraîné pour calculer de manière électronique une estimation de biomasse à partir des objets en nuage de points tridimensionnel.

AQUACULTURE ENVIRONMENT
100

108B

110

108A

IMAGE PROCESSING SYSTEM 112

WATER SURFACE

114

106

102

104

Figure 1

EP 3 843 542 B1

**Figure 2**

EP 3 843 542 B1

FIG. 3

IMAGE PROCESSING SYSTEM 112

IMAGE STORAGE 410

STEREO
IMAGE PAIR

IMAGE FILTRATION 412

BASE IMAGE

STEREO
IMAGE PAIR

OBJECT DETECTION AND
IMAGE SEGMENTATION
414

STEREO MATCHING AND
OCCLUSION HANDLING 416

SEGMENTATION
MASK(S)

DISPARITY
MAP

WEIGHT PREDICTOR 418

WEIGHT PREDICTION

# Figure 4

500

```
┌─────────────────────────────────────┐
│                                      │
│        POSITION CAMERA 502           │
│                                      │
└─────────────────────────────────────┘
                  │
                  ▼
┌─────────────────────────────────────┐
│                                      │
│        CAPTURE IMAGES 504            │
│                                      │
└─────────────────────────────────────┘
                  │
                  ▼
┌─────────────────────────────────────┐
│                                      │
│        DETECT PELLETS 506           │
│                                      │
└─────────────────────────────────────┘
                  │
                  ▼
┌─────────────────────────────────────┐
│                                      │
│        COUNT PELLETS 508            │
│                                      │
└─────────────────────────────────────┘
```

# Figure 5

Figure 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016023071 A1

- US 5732655 A

**Non-patent literature cited in the description**

- **A. DUMAS ; J. FRANCE ; D. BUREAU.** Modelling growth and body composition in fish nutrition: where have we been and where are we going?. *Aquaculture Research,* 2010, vol. 41, 161-181
- **BEDDOW, T.A. ; ROSS, L.G.** Predicting biomass of Atlantic salmon from morphometric lateral measurements. *Journal of Fish Biology,* vol. 49 (3), 469-482
- **J. ZBONTAR ; Y. LECUN.** Stereo Matching by Training a Convolutional Neural Network to Compare Image Patches. *JMLR,* vol. 17 (65), 1-32
- **J. REDMON ; S. DIVVALA ; R. GIRSCHICK ; A. FARHADI.** You Only Look Once: Unified, Real-Time Object Detection. *arXiv:1506.02640v5,* 09 May 2016
- **W. LIU ; D. ANGUELOV ; D. ERHAN ; C. SZEGEDY ; S. REED ; CHENG-YANG FU ; A. C. BERG.** SSD: Single Shot MultiBox Detector. *arXiv:1512.02325v5,* 19 December 2016

- **J. REN ; X. CHEN ; J. LIU ; W. SUN ; J. PANG ; Q. YAN ; Y. TAI ; L. XU.** Accurate Single Stage Detector Using Recurrent Rolling Convolution. *arXiv:1704:05776v1,* 19 April 2017
- **C. FU ; W. LIU ; A. RANGA ; A. TYAGI ; A. BERG.** DSSD: Deconvolutional Single Shot Detector. *arXiv:1701.06659v1,* 23 January 2017
- **R. GIRSHICK.** Fast R-CNN. *arXiv: 1504.08083v2,* 27 September 2015
- **S. REN ; K. HE ; R. GIRSCHICK ; J. SUN.** Faster R-CNN: Towards Real-Time Object Detection with Region Proposal Networks. *arxiv: 1506.01497v3,* 06 January 2016
- **K. HE ; G. GKIOXARI ; P. DOLLÁR ; R. GIRSCHIK.** Mask R-CNN. *arXiv: 1703.06870v3,* 24 January 2018